# EUROPÄISCHE PATENTSCHRIFT

(11) **EP 1 456 823 B1**
(45) Veröffentlichungstag und Bekanntmachung des Hinweises auf die Patenterteilung: **13.04.2016**
(21) Anmeldenummer: 02805732.1
(22) Anmeldetag: 19.12.2002
(51) Int. Cl.: G08B 13/18

(54) **VORRICHTUNG ZUR BERWACHUNG VON RAUMBEREICHEN**
DEVICE FOR MONITORING SPATIAL AREAS
DISPOSITIF DE SURVEILLANCE D'ESPACES

(30) Priorität: 21.12.2001 DE 10163534
(43) Veröffentlichungstag der Anmeldung: 15.09.2004
(73) Patentinhaber: Odos imaging Ltd, Edinburgh EH9 3JF (GB)
(72) Erfinder: MENGEL, Peter, 82223 Eichenau (DE); DOEMENS, Guenter, 83607 Holzkirchen (DE)
(74) Vertreter: Fischer, Ernst
(86) Internationale Anmeldenummer: PCT/DE2002/004676
(87) Internationale Veröffentlichungsnummer: WO 2003/056526

(56) Entgegenhaltungen:
- EP-A- 1 089 030
- DE-A- 4 142 097
- DE-A- 19 947 023
- US-A- 5 321 490
- US-A- 5 694 203
- US-A- 5 752 215

## Beschreibung

Die Erfindung betrifft ein Verfahren zum Bestimmen einer Entfernung eines in einem Raumbereich vorhandenen Objektpunktes mit einem Strahlung aussendenden Sender und einem die ausgesandte Strahlung empfangenden Empfänger, der an eine Auswerteeinheit angeschlossen ist. Die Erfindung betrifft ferner Verwendungen der Vorrichtung.

Derartige Vorrichtungen sind beispielsweise als sogenannte Lichtvorhänge bekannt. Lichtvorhänge finden in zahlreichen Gebieten zur Absicherung von Gefahrenbereichen oder zum Schutz von Objekten oder Personen Verwendung. Es handelt sich dabei um ein industrielles Massenprodukt. Eine typische Anwendung stellt der Personenschutz im Arbeitsbereich von Produktionseinrichtungen dar.

Im Grunde handelt es sich bei Lichtvorhängen um eine Aneinanderreihung von einzelnen Lichtschranken entlang dem gesamten Überwachungsraum. Dabei unterscheidet man zwischen passiven und aktiven Varianten. Die aktiven Varianten weisen jeweils Sender mit gegenüberliegenden Empfängern auf, während die passiven Varianten nebeneinander angeordnete Sender und Empfänger umfassen, wobei das von den Empfängern ausgesandte Licht von gegenüber den Sendern angeordneten Reflektoren zu den Empfängern zurückgeworfen wird.

Die bekannten Lichtvorhänge bedingen hohe Montage- und Verfahrenskosten, da eine Vielzahl von einzelnen Lichtschranken entlang des gesamten Überwachungsraumes angeordnet und in entsprechend großen Gehäusen untergebracht werden muss. Außerdem ist die große Störanfälligkeit der bekannten Lichtvorhänge von Nachteil. Beispielsweise ist es möglich, dass unerwünschte Reflexionen an Wasserflächen die Anwesenheit von Personen vortäuschen. Diese Störungen treten vor allem im Winter auf, wenn der an Schuhen eingeschleppte Schnee im Inneren eines Gebäude schmilzt und kleine Wasserlachen bildet. Auch im Überwachungsbereich der Lichtvorhänge liegen gebliebenes Papier kann zu unerwünschten Reflexionen und zu Störungen der Lichtvorhänge führen.

Aus der WO 99/34235 ist ferner eine Vorrichtung zur Aufnahme eines dreidimensionalen Abstandsbildes bekannt. In der Vorrichtung zur Aufnahme eines dreidimensionalen Abstandsbildes werden von einem Sender Lichtimpulse in Richtung eines zu vermessenden Objektes gesandt, die zu einem optoelektronischen CMOS-Sensor mit einer Vielzahl von Pixeln mit Kurzzeitintegration zurückgeworfen werden. Für eine Abstandsmessung wird in dem CMOS-Sensor ein Zeitmessfenster geöffnet, dessen Zeitdauer einer vorbestimmbaren Integrationszeit entspricht. Die Integrationszeit ist kleiner oder gleich der Länge der ausgesandten Lichtimpulse. Am Ende der Integrationszeit wird die Integration der von den Pixeln des CMOSSensors empfangenen Lichtimpulse einheitlich abgebrochen. Wenn die Unterschiede in der Reflektivität vernachlässigt werden können, ist die jedem Pixel des CMOS-Sensors zugeordnete Ladung ein Maß für die Laufzeit eines dem jeweiligen Pixel zugeordneten Lichtimpulses. Durch Aufnahmen mit unterschiedlicher Integrationszeit lässt sich auch der Einfluss der für verschiedenen Objektpunkte unterschiedlichen Reflektivität eliminieren. Aus den in den einzelnen Pixeln des CMOS-Sensors gespeicherten Ladungen lässt sich daher ein dreidimensionales Abstandsbild errechnen.

In US 5 321 490 A ist ein Sensor mit einer Vorrichtung zur gerichteten Emission von Energie, wobei die Energie in divergente Strahlen aufgeteilt wird, und einen Empfänger beschrieben. Der Empfänger weist zwei Detektoren zum Empfangen der reflektierten Strahlung auf und ist eingerichtet, die Flugzeit und den Zeitintervall zwischen den zwei divergenten Strahlen zu messen. In US 5 694 203 ist eine Entfernungskamera beschrieben, die einen Oszillator zum Erzeugen eines Referenzsignals und eine Lichtquelle aufweist, die moduliertes Licht entsprechend des Referenzsignals emittiert. Das von einem dreidimensionalen Ziel reflektierte Licht wird von einer bildverstärkten Kamera mit einem zu dem Referenzsignal phasenverschobenen Detektionsfenster aufgenommen.

Ausgehend von diesem Stand der Technik liegt der Erfindung die Aufgabe zu Grunde, ein Verfahren zur optischen Überwachung von Raumbereichen zu schaffen.

Die Aufgabe wird mit den Merkmalen des Patentanspruchs 1 gelöst. Bevorzugte Ausgestaltungen dazu sind in den weiteren Patentansprüchen angegeben.

Die Aufgabe wird dadurch gelöst, dass der Sender Strahlungsimpulse aussendet und dass der Empfänger eine Optik aufweist, mit deren Hilfe der zu überwachende Raumbereich auf einen Halbleitersensor mit einer Vielzahl von lichtempfindlichen Elementen mit Kurzzeitintegration abbildbar ist, denen zur Bestimmung der Laufzeit der Strahlungspulse eine Laufzeitbestimmungseinheit nachgeschaltet ist, die eine Auswahleinheit beaufschlagt, die an einem Ausgang beim Auftreten voreinstellbarer Laufzeitwerte ein Detektionssignal ausgibt.

Bei der Vorrichtung wird das Überwachungsobjekt mit Hilfe einer Laufzeitmessung für Lichtimpulse vermessen. Die Auswahleinheit sorgt dafür, dass nur diejenigen Objekte ein Detektionssignal auslösen, die sich in einen vorbestimmten Abstand zur Vorrichtung befinden. Daher ist es bei der Vorrichtung nicht möglich, dass zufällig im Überwachungsbereich der Vorrichtung anwesende Gegenstände mit hohem Reflexionsvermögen ein fehlerhaftes Detektionssignal auslösen.

Ein weiterer Vorteil der Vorrichtung ist die einfache Montierbarkeit, da lediglich ein einzelner Sender und ein Empfänger in der Nähe des zu überwachenden Raumbereichs montiert werden müssen. Im Gegensatz zum Stand der Technik ist es daher nicht notwendig, entlang dem zu überwachenden Raumbereich eine Vielzahl von Sendern mit gegenüberliegenden Reflektoren oder gegenüberliegenden Empfängern zu montieren. Bei der Vorrichtung sind die Sender und Empfänger vielmehr in einem Halbleitersensor zusammengefasst, der auf einfache Weise so montiert werden kann, dass ein zu überwachender Raumbereich flächendeckend überwacht werden kann.

Da die Vorrichtung auch ohne Reflektoren auskommt, braucht nicht dafür gesorgt zu werden, dass die Reflektoren eine über die Zeit gleichbleibende Reflektivität aufweisen. Es ist daher nicht erforderlich, wie beim Stand der Technik, die Reflektoren gegen Verschmutzung zu schützen. Die Vorrichtung ist daher wartungsfreundlich.

Die Verwendung von Halbleitesensoren bietet darüber hinaus die Vorteile einer Fertigung in großen Stückzahlen zu geringen Stückkosten. Die Anpassung an die jeweilige Anwendung kann durch Programmieren der Auswahleinheit vorgenommen werden. Die Vorrichtungen brauchen daher nicht bereits bei der Fertigung an den jeweiligen Anwendungszweck angepasst werden, so dass auch für die fertigen Vorrichtungen große Stückzahlen möglich sind.

Bei einer bevorzugten Ausführungsform der Erfindung ist die Auswahleinheit in der Lage, im zu überwachenden Raumbereich anwesende Objekte zu unterscheiden. Bei dieser Ausführungsform versucht die Auswahleinheit aus den gemessenen Laufzeitwerten ein Profil zu errechnen, das mit in der Auswahleinheit abgespeicherten Profilmustern verglichen wird. Bei ausreichender Übereinstimmung zwischen dem Profilmuster und dem errechneten Profil gibt die Auswahleinheit ein Detektionssignal aus.

Diese Vorrichtung ist insbesondere dann von Vorteil, wenn nur bestimmte Objekte, beispielsweise Personen, im zu überwachenden Raumbereich, ein Detektionssignal auslösen sollen.

Die Vorrichtung eignet sich für eine Reihe von Anwendungen:
Die Vorrichtung eignet sich unter anderem zu Zwecken der Verkehrszählung, beispielweise zur Zählung von Fahrzeugen, wobei die Vorrichtung auch zu Unterscheidung von verschiedenen Fahrzeugtypen in der Lage ist.

Insbesondere im öffentlichen Nahverkehr besteht ein Bedarf nach zuverlässigen Zählvorrichtungen zum Zählen von Fahrgästen. Durch Anordnung der Vorrichtung im Durchgangsbereich, wie beispielsweise Sperranlagen zur Entwertung von Fahrscheinen, Fußgängerpassagen oder Türen von öffentlichen Verkehrsmitteln, lassen sich die durch den zu überwachenden Raumbereich hindurchtretenden Fahrgäste zählen.

Ein weiterer Anwendungsfall ist die Überwachung von Bahngleisen entlang von Bahnsteigen, da in der Zukunft schienengebundene Verkehrsmittel vollautomatisch ohne Fahrer gesteuert werden sollen. Um zu gewährleisten, dass sich bei Einfahrt eines Zuges keine Personen auf den Gleisen befinden, werden entlang der Bahnsteigkante Vorrichtungen angeordnet, die vorzugsweise den Raumbereich über den Gleisen überwachen. Da die Vorrichtung keine den Sendern gegenüberliegenden Reflektoren benötigt, können die Sender und Empfänger in den Unterbau eines Bahnsteigs integriert werden, ohne dass auf der gegenüberliegenden Seite Reflektoren angebracht werden müssen.

Weitere Anwendungen betreffen automatische Türöffner oder Türschließanlagen, bei denen vor allem die verringerte Störanfälligkeit der Vorrichtung von Vorteil ist.

Die Vorrichtung lässt sich auch zur Erhöhung der Arbeitssicherheit einsetzen. Insbesondere kann mit der Vorrichtung der Arbeitsbereich einer Werkzeugmaschine, beispielsweise eine Stanze oder einer Presse, abgesichert werden. Falls eine Person in den zu überwachenden Arbeitsbereich der Werkzeugmaschine eingreift, gibt die Vorrichtung ein Detektionssignal aus, welches ein sofortiges Anhalten der Werkzeugmaschine veranlasst.

Eine weitere denkbare Anwendung ist die Bestimmung des Volumens von Fördergut auf einem Förderband. Damit wird insbesondere die Fähigkeit der Vorrichtung zur Profilerkennung ausgenutzt.

Weitere Einzelheiten sind Gegenstand der abhängigen Ansprüche.

Nachfolgend wird die Erfindung anhand der beigefügten Zeichnung im Einzelnen erläutert. Es zeigen:
- Figur 1: eine Vorrichtung zur optischen Überwachung von Raumbereichen;
- Figur 2: ein Diagramm, das den zeitlichen Ablauf des bei der Vorrichtung aus Figur 1 angewendeten Messverfahrens zeigt;
- Figur 3: die Vorrichtung aus Figur 1 bei der Verkehrszählung auf einer Straße;
- Figur 4: die Vorrichtung aus Figur 1 bei Überwachung eines Förderbandes;
- Figur 5: die Vorrichtung aus Figur 1 bei der Überwachung einer automatisch betätigten Tür;
- Figur 6: die Vorrichtung aus Figur 1 bei der Überwachung einer Werkzeugmaschine; und

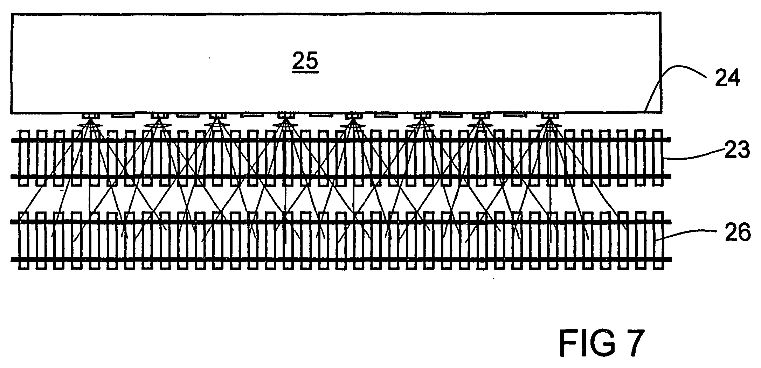

- Figur 7: die entlang einer Bahnsteigkante angebrachte Vorrichtung aus Figur 1 bei der Überwachung eines Gleises.

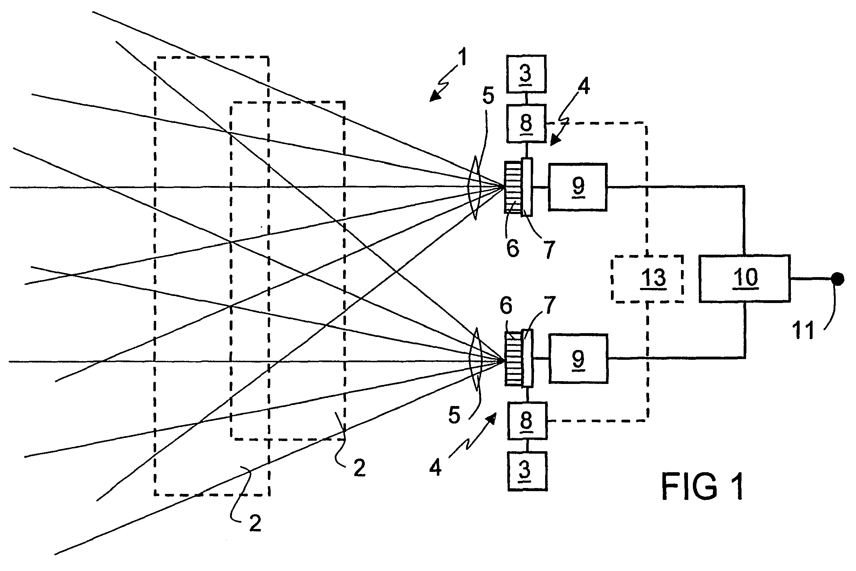

Figur 1 zeigt eine Überwachungsvorrichtung 1 zur Überwachung von Raumbereichen 2. Die Überwachungsvorrichtung 1 verfügt über Sender 3, die in Richtung der zu überwachenden Raumbereiche 2 kurze Strahlungspulse abgeben. Bei dem Sender 3 handelt es sich um Leuchtdioden oder Laser, die vorzugsweise im infraroten Wellenlängenbereich emittieren. Die Strahlungspulse werden von Objekten in den Raumbereichen 2 zu den Empfängern 4 zurückgeworfen. Die Empfänger 4 umfassen eine Optik 5, durch die sich in den Raumbereichen 2 befindende Objekte auf Pixel 6 eines CMOS-Sensors 7 mit Kurzzeitintegration abgebildet werden. Bei dem CMOS-Sensor 7 handelt es sich um einen monolithisch integrierten optoelektronischen Halbleitersensor, der in CMOS-Technik hergestellt wurde. Die einzelnen Pixel 6 des CMOS-Sensors 7 sind wahlfrei je einzeln ansteuerbar. Die Pixel 6 des CMOS-Sensors 7 umfassen jeweils eine Photodiode und einen zugeordneten Pixelkondensator, der bei geöffneten Zeitmessfenster durch Belichtung der Photodiode entladen wird. Die nach Belichtung der Photodiode verbleibende Restladung ist daher ein Maß für die von der Photodiode erfasste Lichtmenge oder Strahlungsenergie. Der zeitliche Ablauf der Kurzzeitintegration im CMOS-Sensor 7 wird durch einen Zeitgeber 8 gesteuert, der sowohl an den Sender 3 als auch an den CMOS-Sensor 7 angeschlossen ist.

Die den Restladungen in den Pixelkondensatoren entsprechenden Pixelspannungswerte können von einer Laufzeitbestimmungseinheit 9 ausgelesen und ausgewertet werden. Durch die Laufzeitbestimmungseinheit 9 wird jedem Pixel 6 des CMOS-Sensors 7 ein Entfernungswert zugewiesen. Die Laufzeitbestimmungseinheit 9 erstellt daher ein Entfernungsbild eines Objekts in den Raumbereichen 2. Die von der Laufzeitbestimmungseinheit 7 berechneten Entfernungswerte werden anschließend einer Auswahleinheit 10 zugeführt, die immer dann ein Detektionssignal an einem Ausgang 11 ausgibt, wenn die Entfernungswerte den vorbestimmten Raumbereichen 2 entsprechen.

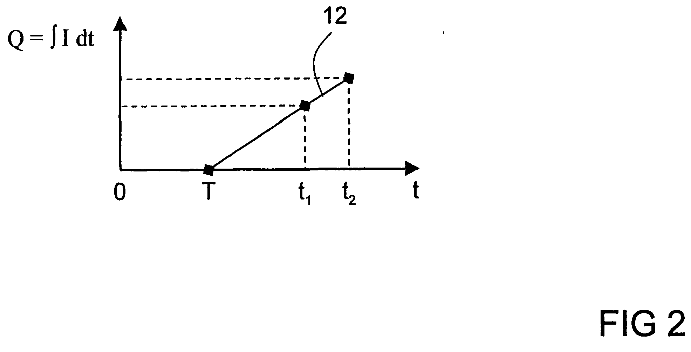

Nachfolgend wird anhand Figur 2 das Prinzip des in den Empfängern 4 verwendeten Verfahrens erläutert. Um die Entfernung eines in den Raumbereichen 2 vorhandenen Objektpunkts zu bestimmen, wird von jeweils einem Sender 3 ein Strahlungspuls ausgesandt und der zugehörige CMOS-Sensor 7 für ein erstes Zeitintervall der Dauer t₁ aktiviert. Eine Kurve 12 veranschaulicht den integrierten Stromfluss über die Photodiode, die den zugehörigen Pixelkondensator entlädt. Die Kurve 12 zeigt daher die zu einem bestimmten Zeitpunkt über die Photo diode abgeflossene Ladung an. Am Ende des ersten Zeitintervalls, also zum Zeitpunkt t₁, nimmt die gesamte, über die Photodiode abgeflossene Ladung einen Wert Q₁ an. Um den Einfluss unterschiedlicher Reflektivitäten am Objektpunkt zu eliminieren, wird anschließend erneut ein Strahlungspuls vom Sender 3 ausgesandt und die Pixel 6 auf dem CMOS-Sensor 7 während eines zweiten Zeitintervalls mit der Dauer t₂ aktiviert. Die Dauer des zweiten Zeitintervalls ist größer oder kleiner als die Dauer des ersten Zeitintervalls. Am Ende des zweiten Zeitintervalls, also zum Zeitpunkt t₂, ergibt sich für die über die Photodiode abgeflossene Ladungsmenge ein Wert Q₂. Durch die beiden Messwerte Q₁ und Q₂ zum Zeitpunkt t₁ und t₂ kann die Gerade 12 gelegt werden, deren Schnittpunkt mit der Zeitachse die Laufzeit T des Strahlungspulses vom Sender 3 zum Objektpunkt und zurück zum jeweiligen Pixel 6 angibt. Aus der Laufzeit T kann daher die Entfernung des Objektpunkts im Raumbereich 2 zum Empfänger 4 berechnet werden. Die Entfernung d ergibt sich dabei näherungsweise aus der Formel d = c * T/2, wobei c die Lichtgeschwindigkeit ist. Die Berechnung der Entfernungswerte wird von der Laufzeitbestimmungseinheit 9 vorgenommen, die die Messwerte von aufeinanderfolgenden Messungen aus dem CMOS-Sensor 7 ausliest. Eine Entfernungsbestimmung kann dabei innerhalb von etwa 5 ms vorgenommen werden.

Es sei angemerkt, dass die Laufzeitbestimmungseinheit ebenso wie der Zeitgeber 8 zusammen mit dem CMOS-Sensor 7 auf einem einzelnen Halbleiterchip integriert sein können. Falls lediglich ein Sender 3 und ein Empfänger 4 vorhanden sind, kann es auch sinnvoll sein, die Auswahleinheit 10 auf dem Halbleiterchip zu integrieren. Dann ergibt sich eine kompakte, Sender 3 und Empfänger 4 umfassende Vorrichtung zur optischen Überwachung von Raumbereichen 2. Wenn dagegen mehrere Sender 3 und Empfänger 4 vorhanden sind, wird sinnvollerweise lediglich jeweils ein Sender 3, ein CMOS-Sensor 7, ein Zeitgeber 8 und eine Laufzeitbestimmungseinheit 9 auf einem Halbleiterchip integriert. Um Interferenzen zwischen den einzelnen Sendern 3 und Empfängern 4 zu verhindern, werden die Zeitgeber durch eine in Figur 1 gestrichelt eingezeichnete Synchronisiervorrichtung 13 derart synchronisiert, dass jeweils einer der Sender 3 und Empfänger 4 eine Messung durchführt.

Die Auswahleinheit 10 ist in der Lage, aus den Laufzeitbestimmungseinheiten 9 gebildeten Entfernungsbildern ein Profil von den in dem zu überwachenden Raumbereich 2 anwesenden Objekten zu erstellen. Dabei werden nur diejenigen Entfernungswerte berücksichtigt, die innerhalb eines voreinstellbaren Wertebereichs liegen, der dem Raumbereich 2 entspricht. Die Überwachungsvorrichtung 1 ist daher hinsichtlich des zu überwachenden Raumbereichs 2 parametrierbar.

Durch die Beschränkung auf vorgegebene Entfernungswerte wird verhindert, dass die Überwachungsvorrichtung 1 auch dann ein Detektionssignal am Ausgang 11 ausgibt, wenn ein Gegenstand außerhalb der Raumbereichen 2 die von den Sendern 3 ausgesandten Strahlungspulse in Richtung der Empfänger 4 zurückwirft. Bei der in Figur 1 dargestellten Überwachungsvorrichtung 1 wird daher nur dann ein Detektionssignal am Ausgang 11 ausgegeben, wenn sich tatsächlich ein Objekt in den Raumbereichen 2 befindet. Bei der Überwachungsvorrichtung 1 kann es daher nicht vorkommen, dass ein Objekt außerhalb der Raumbereiche 2 irrtümlicherweise ein Detektionssignal auslöst. Insbesondere wird die Überwachungsvorrichtung 1 nicht durch unerwünschte Reflexionen, beispielsweise an Wasseroberflächen oder Papieroberflächen, getäuscht. Die in Figur 1 dargestellte Überwachungsvorrichtung 1 ist daher herkömmlichen Lichtvorhängen überlegen.

Darüber hinaus ist es bei der Überwachungsvorrichtung 1 möglich, die Entfernungsmesswerte mit einem vorgegebenen Profil zu vergleichen. Beispielsweise kann die Auswahleinheit 10 versuchen, verschiedene vorgegebene Profilmuster an das von den Messwerten gebildete Profil anzupassen, wobei die mittlere quadratische Abweichung ein Maß für die Übereinstimmung ist. Dies kann dazu verwendet werden, verschiedenartige Objekte zu unterscheiden und am Ausgang 11 jeweils für die unterschiedlichen Objekte charakteristische Detektionssignale auszugeben. Außerdem ist es möglich, die Grenzflächen der zu überwachenden Raumbereiche 2 als Referenzprofil abzuspeichern. Dies ist vor allen dann sinnvoll, wenn beispielsweise eine Tür von der Überwachungsvorrichtung 1 überwacht werden soll. Bei der Überwachung einer Tür ist es zum Beispiel zweckmäßig, die Grenzflächen des Türstocks als Referenzprofil in der Auswahleinheit 10 abzuspeichern, so dass die Auswahleinheit 10 in der Lage ist, eine Abweichung vom Referenzprofil zu detektieren, wenn eine Person durch die Tür hindurchtritt.

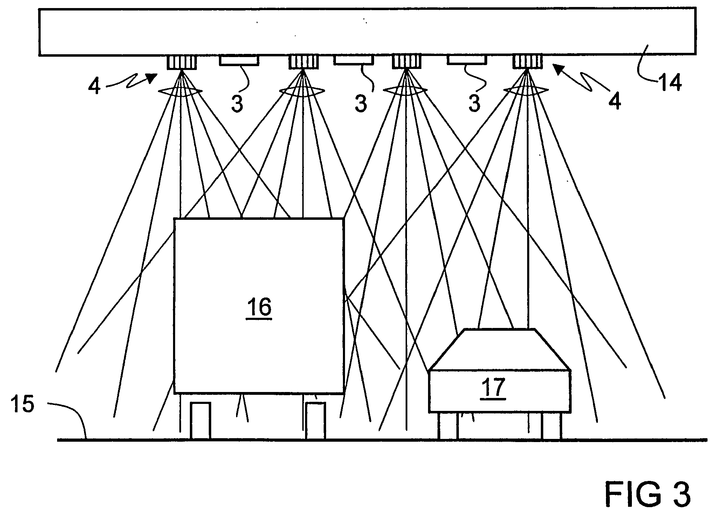

Neben der Überwachung von Eingängen eignet sich die Überwachungsvorrichtung 1 auch für weitere Anwendungen. In Figur 3 ist eine derartige Anwendung dargestellt. Bei dieser Anwendungen dient die Überwachungsvorrichtung 1 dazu, die Verkehrsdichte auf einer mehrspurigen Straße zu überwachen. Zu diesem Zwecke sind die Sender 3 und Empfänger 4 auf einem Träger 14 oberhalb einer Straße 15 angebracht. Durch die Überwachungsvorrichtung 1 können auf der Straße 15 LKWs 16 von Pkws 17 unterschieden werden. Dabei wird die Überwachungsvorrichtung 1 nicht durch Reflexionen an der Oberfläche der Straße 15 getäuscht. Derartige Reflexionen an der Oberfläche der Straße 15 können bei schlechtem Wetter durch Wasserlachen hervorgerufen werden. Da die Überwachungsvorrichtung 1 aber nur auf Objekte empfindlich ist, die sich in einem bestimmten Entfernung zur Überwachungsvorrichtung 1 befinden, werden durch solche Wasserlachen keine fehlerhaften Zählereignisse ausgelöst.

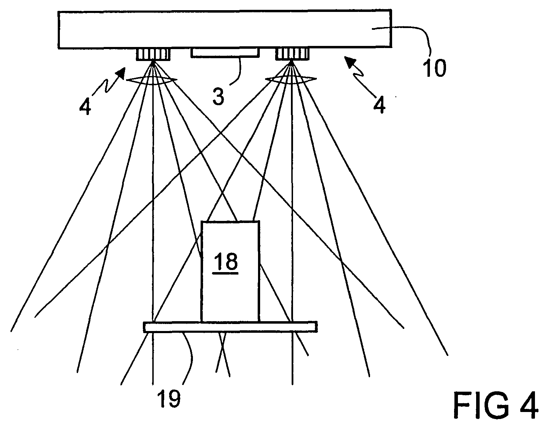

Eine weitere Anwendung ist in Figur 4 dargestellt. Bei dieser Anwendungen dient die Überwachungsvorrichtung 1 dazu, das Volumen von Fördergut, beispielsweise von Gepäckstücken 18 auf einem Förderband 19 zu bestimmen. Dies ist ohne Probleme möglich, da mit der Überwachungsvorrichtung 1 das Querschnitt profil der Gepäckstücke 18 vermessen werden kann. Da die Geschwindigkeit des Förderbandes 19 bekannt ist, kann aus den nacheinander gemessenen Querschnittsprofilen der Gepäckstücke 18 und der bekannten Geschwindigkeit des Förderbands 19 das Volumen der Gepäckstücke 18 bestimmt werden.

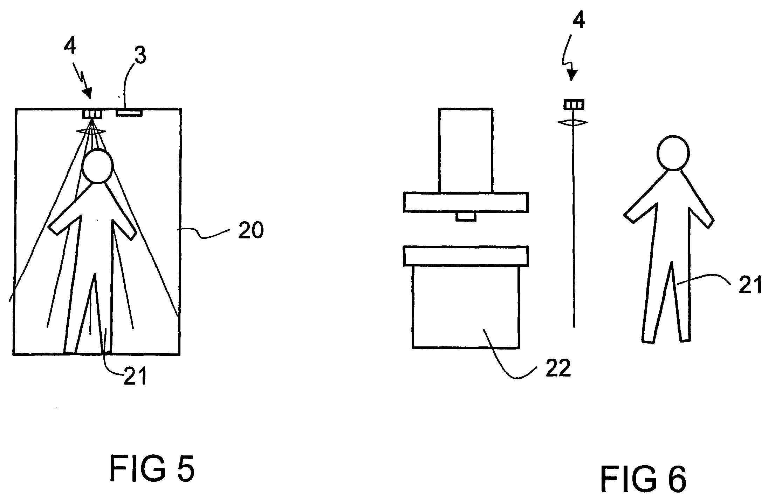

Figur 5 zeigt eine weitere Anwendung der Überwachungsvorrichtung 1, nämlich den Einsatz der Überwachungsvorrichtung 1 im Bereich einer automatisch betätigten Tür 20. Bei dieser Tür 20 kann es sich um eine Aufzugstür handeln. Durch die Überwachungsvorrichtung 1 kann die Anwesenheit einer Person 21 im Türbereich detektiert und ein unbeabsichtigtes Schließen der Türen 20 des Aufzugs verhindert werden. Das gleiche gilt auch für Türen 20 von öffentlichen Verkehrsmitteln. Auch hier besteht die Notwendigkeit, ein Schließen der Tür 20 dann zu verhindern, wenn sich eine Person 21 im Türbereich befindet. Darüber hinaus kann die Überwachungsvorrichtung 1 auch zum Zählen von Fahrgästen dienen, die durch die Tür 20 hindurchtreten. In diesem Zusammenhang ist die Fähigkeit der Überwachungsvorrichtung 1 zur Unterscheidung zwischen Objekten hilfreich, da mit der Überwachungsvorrichtung 1 Personen 21 als solche erkannt und gezählt werden können.

Ein weiteres Einsatzgebiet stellt die Absicherung von Fertigungsanlagen 22 dar. In diesem Zusammenhang ist insbesondere die geringe Störanfälligkeit der Überwachungsvorrichtung 1 von Vorteil, da der Fertigungsprozess möglichst unterbrechungsfrei verlaufen soll. Da aber die Überwachungsvorrichtung 1 nur dann ein Detektionssignal am Ausgang 11 ausgibt, wenn tatsächlich eine Person 21 in den überwachten Raumbereich 2 eintritt, ist die Überwachungsvorrichtung 1 das geeignete Mittel, um die Arbeitssicherheit zu gewährleisten, indem ein ausreichender Abstand zwischen Fertigungspersonal und dem Arbeitsbereich der Fertigungseinrichtung 22 sichergestellt wird.

Schließlich kann die Überwachungsvorrichtung 1 auch dazu verwendet werden, den Gleisraum über einem Gleis 23 entlang einer Bahnsteigkante 24 eines Bahnsteigs 25 zu überwachen. Mit der Vorrichtung 1 ist es möglich, den Gleisraum über dem Gleis 23 lückenlos auf Hindernisse zu überwachen. Dazu werden auf der der Bahnsteigkante 24 gegenüberliegenden Seite des Gleises 23 keine Reflexionsvorrichtungen benötigt, die beispielsweise bei herkömmlichen Lichtschranken erforderlich wären. Herkömmliche Lichtschranken würden darüber hinaus nur dann den Gleisraum lückenlos abdecken, wenn Sender und Empfänger entlang der Bahnsteigkante dichtliegend nebeneinander angeordnet würden. Demgegenüber genügt es, mehrere der Überwachungsvorrichtungen 1 in regelmäßigen Abständen entlang der Bahnsteigkante 24 anzuordnen, um den Gleisraum über dem Gleis 23 lückenlos überwachen zu können. Eine lückenlose Überwachung des Gleisraums entlang der Bahnsteigkante 24 ist aber eine Voraussetzung für die vollautomatische Steuerung von Schienenfahrzeugen, die beispielsweise im öffentlichen Nahverkehr angestrebt wird.

Besonders hervorzuheben ist in diesem Zusammenhang auch die Beschränkung des überwachten Raumbereichs 2 in eine Richtung quer zum Gleis 23. Daher können auf einem Nachbargleis 26 vorbeifahrende Züge keinen Fehlalarm auslösen.

## Patentansprüche

1. Verfahren zum Bestimmen einer Entfernung eines in einem Raumbereich (2) vorhandenen Objektpunktes mit den Schritten:
- Bereitstellen einer Vorrichtung zur Überwachung von Raumbereichen (2) mit einem Strahlung aussendenden Sender (3) und einem die ausgesandte Strahlung empfangenden Empfänger (4) der an eine Auswerteeinheit angeschlossen ist, wobei der Sender (3) Strahlungspulse aussendet und der Empfänger (4) eine Optik (5) aufweist, mit deren Hilfe der zu überwachende Raumbereich (2) auf einen Halbleitersensor (7) mit Kurzzeitintegration abbilbar ist, wobei die Pixel des Halbleitersensors jeweils eine Photodiode und einen zugeordneten Pixelkondensator umfassen;
- Aussenden eines Strahlungspulses von dem Sender und Aktivieren des zugehörigen Halbleitersensors (7) für ein erstes Zeitintervall der Dauer t₁;
- Bestimmen am Ende des ersten Zeitintervalls die gesamte, über die Photodiode abgeflossene Ladung Q₁;
- Aussenden eines Strahlungspulses von dem Sender (3) und Aktivieren der Pixel (6) auf dem Halbleitersensor (7) während eines zweiten Zeitintervalls mit der Dauer t₂, welches größer oder kleiner als die Dauer des ersten Zeitintervalls ist;
- Bestimmen am Ende des zweiten Zeitintervalls die über die Photodiode abgeflossene Ladungsmenge Q₂;
- Legen durch die beiden Messwerte Q₁ und Q₂ zum Zeitpunkt t₁ und t₂ einer Gerade (12), deren Schnittpunkt mit der Zeitachse die Laufzeit T des Strahlungspulses vom Sender (3) zum Objektpunkt und zurück zum jeweiligen Pixel (6) angibt;
- Berechnen der Entfernung des Objektpunkts im Raumbereich (2) zum Empfänger (4) aus der Laufzeit T.

2. Verfahren gemäß Anspruch 1, mit dem Schritt: Ausgeben eines Detektionssignals beim Auftreten von voreinstellbaren Laufzeitwerten.

3. Verfahren gemäß Anspruch 1 oder 2, wobei eine Entfernungsbestimmung innerhalb von etwa 5 ms vorgenommen wird.

4. Verfahren gemäß einem der Ansprüche 1 bis 3, wobei es sich bei dem Sender (3) um Leuchtdioden oder Laser handelt.

5. Verfahren gemäß Anspruch 5, wobei die Leuchtdioden oder Laser im infraroten Wellenlängenbereich emittieren.

6. Verfahren gemäß einem der Ansprüche 1 bis 5, wobei der Halbleitersensor ein CMOS-Sensor ist.

7. Verfahren gemäß einem der Ansprüche 1 bis 6, wobei die einzelnen Pixel (6) des Halbleitersensors wahlfrei je einzeln ansteuerbar sind.

## Claims

1. Method for determining a distance of an object point being present in spatial area (2), with the steps:
- providing a device for monitoring of spatial areas (2) with a sender (3) emitting radiation and a receiver (4) receiving the emitted radiation, wherein the receiver (4) is connected to a processing unit, wherein the sender (3) sends radiation pulses and the receiver (4) comprises optics (5), wherein the spatial area (2) to be monitored can be imaged on a semiconductor sensor (7) with short-time integration by means of the optics (5), wherein the pixels of the semiconductor sensor respectively comprise a photodiode and an assigned pixel condenser;
- sending a radiation pulse from the sender and activating the assigned semiconductor sensor (7) for a first time interval of the duration t₁;
- determining the complete charge Q₁ flown over the photodiode on the end of the first time interval;
- sending a radiation impulse from the sender (3) and activating the pixels (6) on the semiconductor sensor (7) during a second time interval with the duration t₂, wherein the second time interval is larger or smaller than the duration of the first time interval;
- determining the charge Q₂ flown over the photodiode at the end of the second time interval;
- lying a straight line (12) through the both measurement values Q₁ and Q₂ to the point in time t₁ and t₂, wherein the intersection point of the straight line (12) with the time axis gives the run-time T of the radiation pulse from the sender (3) to the object point and back to the respective pixel (6);
- calculating the distance of the object point in the spatial area (2) to the receiver (4) out of the run-time T.

2. Method according to claim 1, with the step: outputting a detection signal during the occurrence of run-time values that can be preset.

3. Method according to claim 1 or 2, wherein a distance determination is carried out within approximately 5 ms.

4. Method according to any one of claims 1 to 3, wherein the sender (3) involves light-emitting diodes or laser.

5. Method according to claim 5, wherein die light-emitting diodes or laser emit in the infrared wavelength region.

6. Method according to any one of claims 1 to 5, wherein the semiconductor sensor is a CMOS-sensor.

7. Method according to any one of claims 1 to 6, wherein the single pixels (6) of the semiconductor sensor can respectively be individually controllable by choice.

## Revendications

1. Procédé pour déterminer une distance d'un point objet dans une zone (2), comprenant les étapes suivantes :
- utiliser un dispositif de surveillance de zones (2) comprenant un émetteur (3) de rayonnement à envoyer et un récepteur (4) recevant le rayonnement émis dans la zone d'espace, qui est relié à une unité d'évaluation, l'émetteur (3) émettant des impulsions de rayonnement et le récepteur (4) comprenant un système optique (5), au moyen duquel la zone à surveiller peut être cartographiée par un capteur de pixel à semi-conducteur (7) avec une intégration à court terme, chaque capteur de pixel à semi-conducteur comprenant une photodiode et un condensateur de pixel associé ;
- émettre une impulsion de rayonnement par l'émetteur et activer le capteur à semi-conducteur associé (7) pendant un premier intervalle de temps t₁ ;
- déterminer, à la fin du premier intervalle de temps, la charge totale Q₁ déchargée au travers de la photodiode ;
- émettre une impulsion de rayonnement par l'émetteur (3) et activer les pixels (6) sur le capteur à semi-conducteur (7) pendant un deuxième intervalle de temps de durée t₂, qui est supérieur ou inférieur à la durée du premier intervalle de temps ;
- déterminer, à la fin du deuxième intervalle de temps, la charge Q₂ résultant de la quantité de charge déchargée au travers de la photodiode ;
- insérer les deux valeurs mesurées Q₁ et Q₂ aux temps t₁ et t₂ sur une ligne droite (12), dont l'intersection avec l'axe des temps donne la période T de l'impulsion de rayonnement émise par l'émetteur (3) au point objet et le retour aux pixels (6) respectifs ;
- calculer la distance du point objet dans la zone (2) au récepteur (4) de la période T.

2. Procédé selon la revendication 1, comprenant l'étape consistant à délivrer en sortie un signal de détection lors de l'apparition de la période d'évaluation.

3. Procédé selon la revendication 1 ou la revendication 2, dans lequel il est effectué la détermination d'une distance dans un espace d'environ 5 ms.

4. Procédé selon l'une quelconque des revendications 1 à 3, dans lequel l'émetteur (3) est sous forme de diodes électroluminescentes ou d'un laser.

5. Procédé selon la revendication 5, dans lequel les diodes électroluminescentes ou le laser émettent dans la plage des longueurs d'onde infrarouge.

6. Procédé selon l'une quelconque des revendications 1 à 5, dans lequel le capteur à semi-conducteur est un capteur CMOS.

7. Procédé selon l'une quelconque des revendications 1 à 6, dans lequel les pixels individuels (6) du capteur à semi-conducteur peuvent être facultativement commandés individuellement.
